# EUROPEAN PATENT APPLICATION

(11) **EP 4 163 229 A1**
(43) Date of publication of application: **12.04.2023**
(21) Application number: 21201265.2
(22) Date of filing: 06.10.2021
(51) Int. Cl.: B65G 1/02, B65G 1/04, B65G 1/137, B65G 1/06, B65D 1/34

(54) **ALIGNMENT SYSTEM FOR STORAGE MEANS**

(71) Applicant: Martistel LTD, 3107 Limassol (CY)
(72) Inventor: GUBERMAN, MIKHAIL, 125367 Moscow (RU); SHEDIAKOV, ALEKSANDR, 127642 Moscow (RU); SULTANOV, OLEG, 119435 Moscow (RU)
(74) Representative: Jeck, Anton

(57) **Abstract**

The present invention refers to an alignment system for storage means, such as a storage means, comprising two separable parts, a first part located on a platform and a second part located on the storage means the platform comprises a surface adapted to carry or hold or store the storage means and leveling rollers with a defined axis of rotation projecting at least partially beyond the surface of the platform the storage means comprises cavities on its bottom surface that correspond to the leveling rollers/balls in relative position and orientation such that the storage means rest upon the surface of the platform when the leveling rollers/balls are located within the cavities.

## Description

This invention relates to an alignment system for storage means.

The operations opf transporting packaging, retrieving them with the required contents from the storage area, collecting and preparing them for further processing, as well as the processes of correctly handling them, are the basis for the correct functioning of a storage system.

If at least one automatic device is used to pick up, position and move the packaging in the system, there is a need to handle and store the packaging very precisely, ensuring their immobility during system operation such as transportation or handling, which results in a highly costly storage system. An alternative to a high-precision, expensive storage system could be an automatic device that ensures that the storage means is aligned on itself when it is picked up.

In addition, while the packaging is being moved by the automatic device, the packaging must be kept in the same level position as when they were picked up by the device. This is to ensure that the content of the packaging or box or storage means is correctly unloaded from the transportation device at the end of the route. For this purpose, the packaging platform on the device must provide the function of holding and/or aligning the packaging in the correct position on itself for the entire time the packaging is on the device.

The technical task is solved by the present invention is to expand the arsenal of technical means of automatic systems of properly aligning storage means during its handling in a storage arrangement.

The present invention solves this task via an alignment System for storage means with the features according to claim 1. Namely an alignment system for storage means, such as a storage means, comprising two separable parts, a first part located on a platform and a second part located on the storage means
the platform comprises
- a surface adapted to carry or hold or store the storage means and
- leveling rollers/balls with a defined axis of rotation projecting at least partially beyond the surface of the platform
the storage means comprises
- cavities on its bottom surface that correspond to the leveling rollers/balls in relative position and orientation such that the storage means rest upon the surface of the platform when the leveling rollers/balls are located within the cavities.

Preferred embodiments are outlined in the depending claims.

Preferably the individual rollers have the shape of a cylinder and/or a cone and/or a truncated cone. The length or the rollers is preferably 4 to 8 times of its length. This allows in particular for a better distribution of the load over a larger area which was found to enhance the interlocking or grip of the rollers in the according cavities of the storage means (boxes).

Preferably above the surface of the loading area of the device a group of rollers is mounted that can freely rotate relative to their horizontal axes, whose position may correspond to the geometry of the bottom of the. The axes of the rollers over the surface of the platform of e.g. the automatic device are positioned in such a way as to ensure that the container/box/Storage means to be placed on top is aligned in two horizontal directions simultaneously or consecutively in one movement by arranging local responsive inclined planes or cavities in the bottom of the container, interacting with the rollers.

In addition, the height of the rollers above the device's platform must be chosen so that the aligned storage means or its cavities respectively mounted on it cannot move horizontally relative to the platform or can move, but within a permissible range/margin.

In one embodiment of the present invention, the rollers can be mounted on the platform along the perimeter of the container/storage means parallel or aligned to its walls, thereby surrounding the bottom surface of the storage means and preferably securing it against movement. A central pivoting lock can be fitted to lock the storage means on the platform in particular against vertical thus upwards movement. The locking mechanism may be designed as a locking element or hock that is provided to reach behind a corresponding element such as an accordingly/correspondingly shaped indentation, depression or hole in the bottom surface of the storage means.

This means according to an embodiment of the invention that an automatic device may lift its platform underneath the storage means at the storage location, which may first use its rollers to guide the storage means into the correct position and then, as the platform continues to move vertically upwards, the platform begins to take the weight of the storage means and pulls it away/lifts it off from the storage location. Once the loading platform with the storage means has been lifted to the required height, preferably a tongue of the twist lock secures (locking mechanism) the storage means which can be of particular use when the storage means is transported along an inclination or slope it which the transporting platform of a transporting device is at least temporarily out of horizontal alignment. Preferably the weight of the storage means to be lifted and its levelling is therefore carried out by lifting the platform of the device, which is by definition designed to handle the specified weight and therefore no additional powerful drive is required to align the storage means on the platform. The actuator of the central lock must be capable of turning the latch tongue/locking mechanism/Locking element to the required force, and this force is independent of the weight of the aligned storage means on the platform.

In another embodiment of the present invention, the rollers, used for aligning and securing the storage means on a platform in the horizontal plane, may be arranged on the platform in pairs and/or at angles to each other preferably symmetrically in relation to the center of the platform and/or the storage means, preferably forming together a diamond or cross shape, preferably not projecting beyond the dimensions of the storage means, more preferably located in a center portion of the platform/the storage means. Guide elements may be formed on the bottom of the storage means, which storage means may rest on the rollers in this manner. A central twist lock can be fitted to secure the storage means preferably vertically, upwards. Roller may also be balls or rolling bodies or a combination of the aforementioned.

Preferably the invention allows storage means of different sizes and types to be aligned and secured using a single platform design. This may particularly be enabled by the above-described orientation of the rollers in angles.

It should also be understood that, similarly to picking up a stationary storage means vertically by a movable platform of e.g. an automatic transportation device, a storage means that is in a transportation situation, e.g. on an automatic transportation device or a conveyor belt or a roller belt can similarly be picked up or placed by some other device or operator on a stationary platform fitted with rollers.

On such a stationary platform (working station, preferably with an adjacent conveyor belt or a roller belt), the rollers, which can also be called "levelling rollers" by synonym, can be arranged in any of the variants proposed earlier, as well as in other possible combinations that are obvious from the invention described above.

Preferably, the site with the first option of alignment rollers on the perimeter of the packaging can be used to arrange a platform for taking the packaging from the conveyor by an external device, carrying out the take-up in the vertical direction. In this case, there will be no rollers on the conveyor belt side of the platform, they will encircle the packaging along the perimeter on the other three sides, aligning it and making it possible to use the device working between several unambiguously defined static take-up/placement points to move the packaging.

The foregoing is a summary of the nature of the invention and may contain simplifications, generalizations, inclusions and/or exclusions of detail; that this summary of the nature of the invention is merely illustrative and does not imply any limitation. Any statement made herein in connection with the automatic transportation device and/or its (transportation) platform is also meant for any other platform (static or not) described herein according to preferred embodiments of the invention.

For a better understanding of the essence of the proposed technical solution, the following is a description of a particular embodiment, not intended to be a limiting example of the practical realization of a method of aligning and holding a container when it is picked up, placed and moved by an automatic device, both in accordance with the claimed invention and with reference to the drawings, in which the following is shown
Fig.1 shows an automatic transportation device with a platform equipped with levelling rollers positioned along the perimeter of the platform and a locking mechanism (latch) in the center of the platform.
Figure 2 shows an automatic transportation device with a platform equipped with levelling rollers positioned along the perimeter of the platform and a locking mechanism in the center with a storage means standing on the platform.
Fig. 3 shows an automatic transportation device with a platform equipped with levelling rollers arranged in a cross shape at a center portion of the platform.
Fig. 4-6 shows an automatic transportation device with a platform equipped with rollers arranged in a cross shape and a locking latch in the center with different types of storage means and different numbers of storage means on the platform.
Figure 7-9 shows, step by step, the method of taking the storage means from a storage place onto the platform equipped with rollers arranged in a cross shape in a center part of the platform, aligning the platform and the storage means and holding the storage means on the platform against relative horizontal movement.
Figure 10 shows a fixed/stationary platform for two storage means, equipped with levelling rollers positioned along/ parallel to the perimeter of the platform.
Figure 11 shows a fixed platform for two storage spaces, equipped with levelling rollers positioned along the perimeter of the storage means with the storage means mounted on it.
Figure 12-13 shows how to pick up and place the storage means on the fixed/stationary platform.
Figure 14 shows a fixed platform fitted with levelling rollers arranged in a cross shape.
Figure 15 shows a fixed/stationary platform fitted with levelling rollers arranged in a cross-shape arrangement with different types of storage means standing on it at the same time.
Figure 16 shows a conveyor with levelling pads fitted with rollers on the perimeter, at its start and end.
Fig. 17 shows a conveyor with a leveling platform at least on its start equipped with rollers on its perimeter, with containers standing on it.
Figure 18 shows a mast-type high-rise transport and load-handling device equipped with a grapple equipped comprising a platform with levelling rollers arranged in a diamond shape on top of it.
Fig.19 shows the platform of a mast-type high-rise transport and handling unit fitted with levelling rollers arranged in a diamond shape on it, in its extended state, closed-up.
Fig. 20-21 shows how to preferably pick up and place the storage means with a mast-type high-bay load carrier from the storage location.
Figure 22 shows a variant of the storage means bottom designed to work/interact with levelling rollers positioned along the perimeter of the storage means on the platform.
Figure 23 shows a variant of the bottom of a storage means designed to work/interact with the levelling rollers positioned crosswise on the platform.
Figure 24 shows a variant of the bottom of a storage means designed to work/interact with levelling rollers positioned in a diamond shape on the platform.

Please note that the drawings show only those parts that are necessary for an understanding of the invention, and the standard accessories are not shown in the drawings.

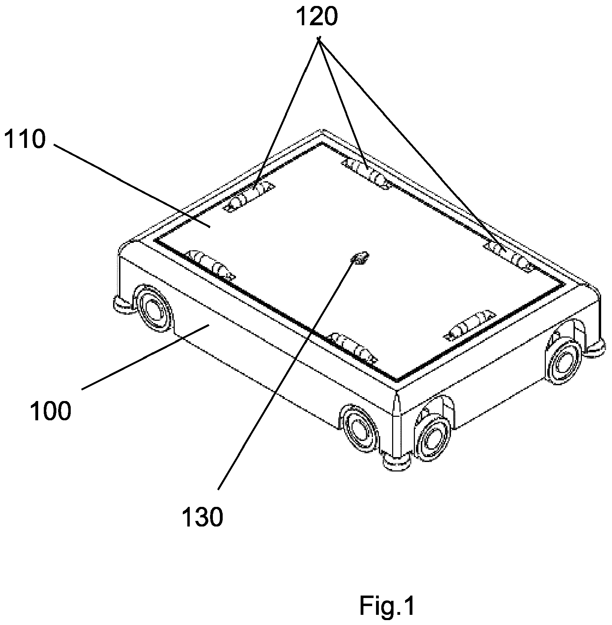

Figure 1 shows a variant version of an automatic transportation device (100) configured to operate in the way claimed in the present invention. Thus, the automatic transportation device 100 is equipped with a lifting platform (110) for picking up and transporting containers on it. On the platform (110), above its upper plane, a set of rollers (120) is mounted along the perimeter of the platform, such that the axis of the rollers is located above the upper plane of the platform, and the rollers (120) can freely rotate independently of each other as they move along the contact surfaces (bottom surface) of the storage means being picked up.

Thus, the levelling rollers (120) of the device shown in Fig. 1 center the storage means on the platform taken by the device (100) in the process of taking it up, as well as fix the movement of the storage means transported by the device (100) in any of the horizontal directions. In order to limit the movement of the storage means in the vertical direction, there may be a (rotary) lock or locking means (130) on the platform, which rotates to lock the storage means after the storage means has been picked up.

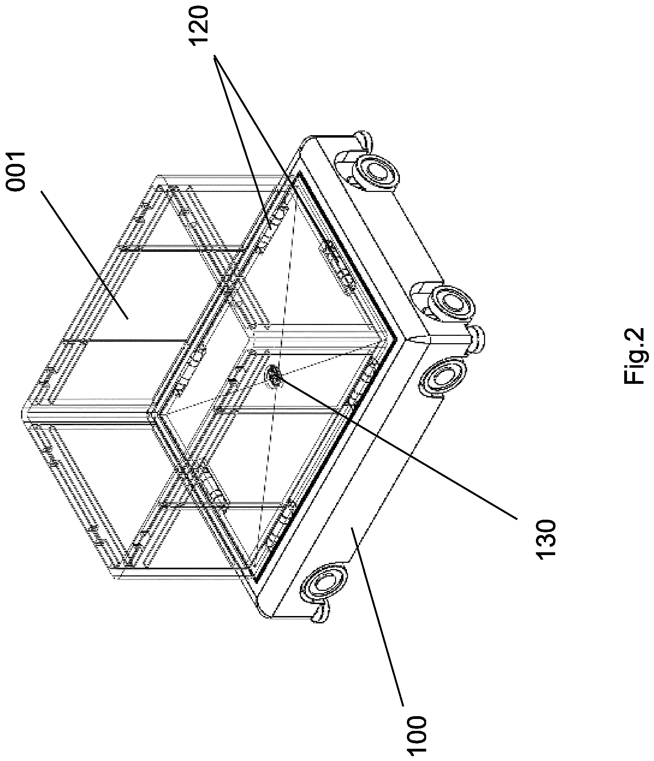

Fig.2 shows the device (100) with the container (001), thus an alignment system it is transporting position. As can be seen from the figure, the container (001) is mounted on (the upper plane of) the platform (110), with the rollers (120) preferably holding the bottom of the container along the perimeter via cavities on the bottom of the container. The optional (rotary) lock (130), may lock it against vertical movement.

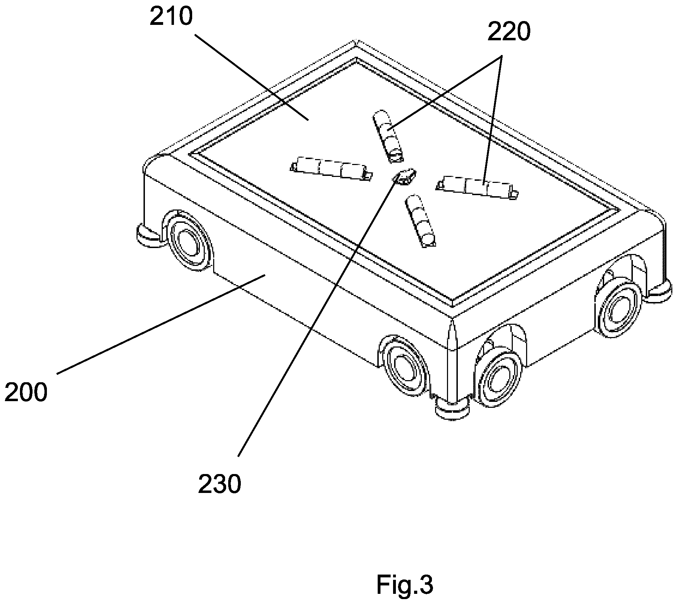

Figure 3 shows another version of the automatic device (200) configured for handling containers in the manner described in the present invention. It may also have a (lifting) platform (210) equipped with levelling rollers (220) and preferably a central lock (230). In contrast to the above-described embodiment (fig.1/2) levelling rollers (220) are arranged in a cross shape towards each other in the middle area of the platform (210), which allows the device to be more compact than the device (100) and to handle different types of containers on it.

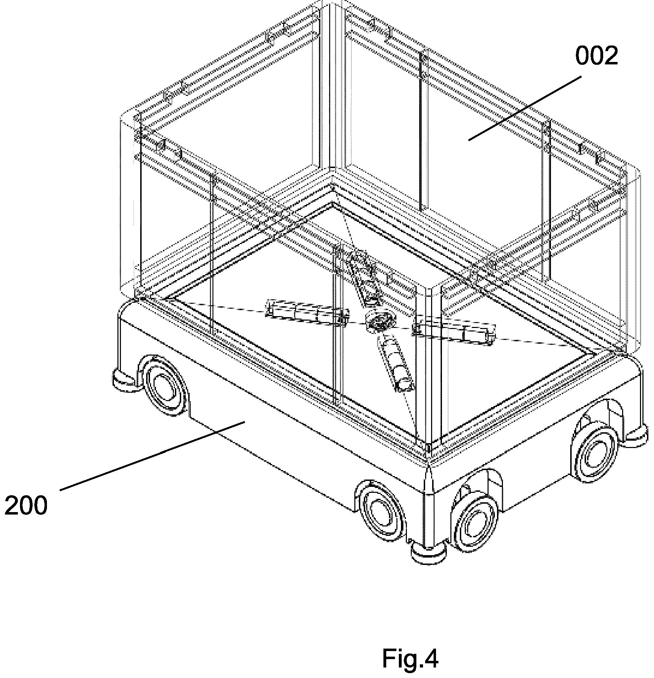

Figure 4-6 shows the device (200), with different types and numbers of storage means on the platform (210). Fig.4 shows a tray (002) on the platform (210), which has a recess at the bottom corresponding to the locations of the levelling rollers (220) and the central lock (230).

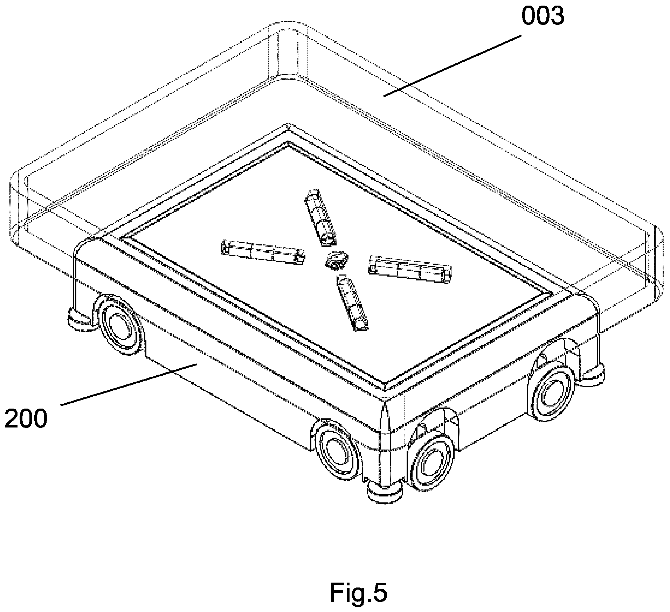

As shown in Fig. 5, the type of storage means the device (200) can handle can vary because the levelling rollers (220) do not cover the storage means along its perimeter, but are located in the center/central part of the platform (210). In this figure the device (200), has taken over the tray (003), the dimensions of which are significantly greater than those of the platform. The only condition for handling the different types of storage means is that the configuration of the cavities in the bottom surface of the storage means, i.e. the pattern and position of the hollows on the bottom of the different types of packaging must be the same, coincide with the position of the levelling rollers (220).

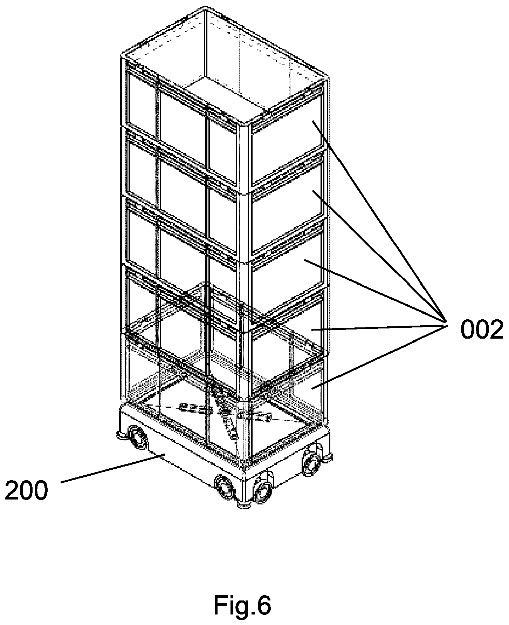

Figure 6 shows a mobile transportation device (200) with a stack of trays (002) placed on the platform (210). Placing the stack of trays (002) on the platform (210) of the device (200) is made possible by aligning the position of the storage means on the device by gravity using passive levelling rollers (220). (It is not necessary to shift the large weight of the stack of trays on the plane during alignment, as was previously the case in the prior art). According to a preferred embodiment, the bottom surface may have a slight inclination towards its center supporting a self-alignment of the rollers and the cavities respectively. Alternatively or additionally the cavities may be provided with funnel type shape. The cavities may have a tapered shape, namely comprise a pyramidal or truncated pyramid shape, that expands towards its opening (in the storage means bottom surface), wherein preferably a first inner surface of the cavity is vertical or almost vertical and an opposing inner surface is provided with an angle towards the first inner surface that deviates from 180°.

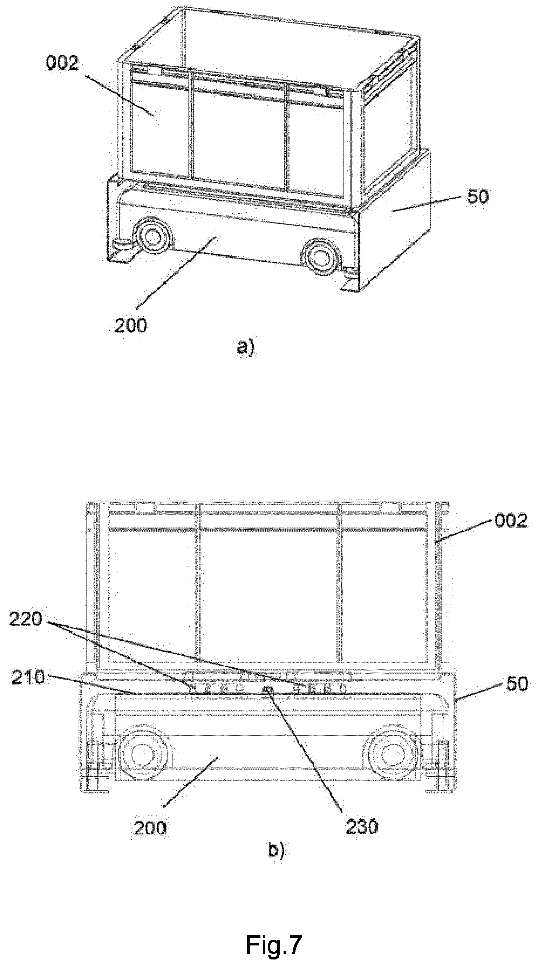

Figs. 7-9 show the method of aligning the storage means step by step. Fig. 7-9 illustrate the method of aligning and holding the storage means during pick-up, storage and transport by the automatic transportation device step by step. Fig. 7 shows two views of the device (200), in its initial state before taking the storage means (002) from the storage area (50).

Figure 7 shows an isometric view. 7a shows an isometric view. Fig. 7b is a frontal view, showing that the device (200) is positioned under the tray (002) standing on the storage place (50) such that the platform (210) equipped with levelling rollers (220) and preferably a lock (230) is positioned under the bottom of the tray (002), below it.

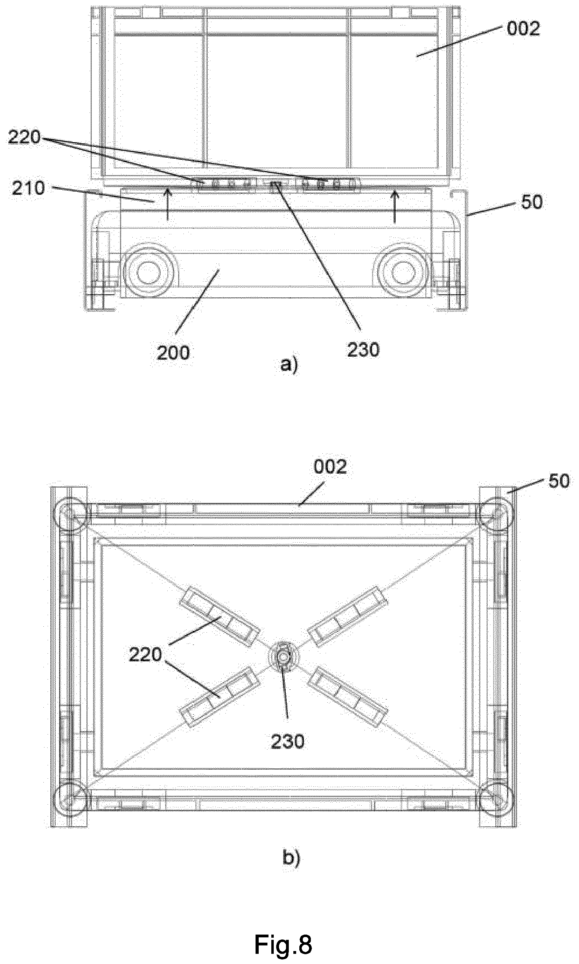

Figures 8a, 8b show in two views the first step of taking the storage means (002) by the device (200). Thus, in the views shown, it can be seen that the platform (210) has moved upwards, raising the storage means (002) above the storage location (50). In doing so, the alignment rollers (220) have caught in their respective selections of the bottom of the storage means (002), aligning it with the platform (210) of the device (200) along the way. The optional (central) lock (230), is also in its preferred designated slot in the bottom of the tray. Preferably the leveling rollers extend further beyond the surface of the platform compared to the lock (230)

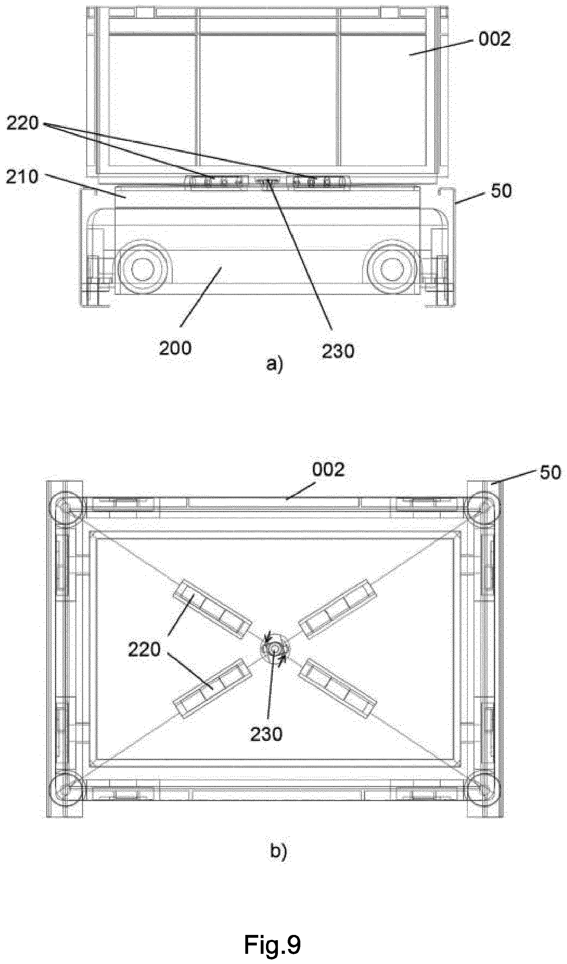

Figures 9a, 9b show in two views the optional last step of the storage means picking process (002) by the mobile transportation device (200), which is its locking from movements in vertical direction. As can be seen in the above-mentioned drawings, the lock tab (230) may rotate about 90 degrees, preferably entering the tray bottom material area and securing the tray against vertical movement. As will be shown below, securing the storage means against vertical movement is not compulsory, but preferably used for securing the storage means during transport by an automatic device.

The method described in Figure 7-9 is valid for both variants of the automatic transportation devices (100), (200) presented in the invention as well for a diamond shape alignment of the rollers and further alignments of rollers on the platform.

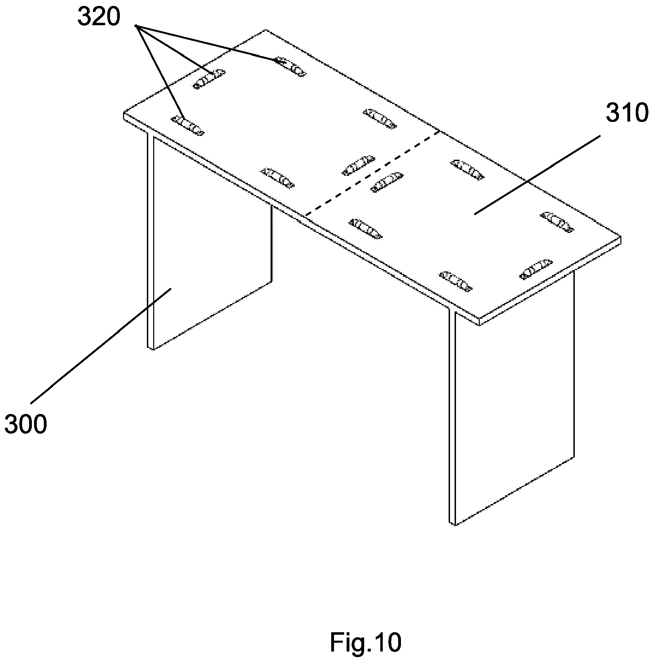

Figure 10 illustrates a variant of the stationary device (300) with a fixed/stationary platform (310) for two storage means, fitted with levelling rollers (320) positioned along the perimeter of the platform and corresponding in their position of the cavities in the storage means. This embodiment of the invention may be valid in places where a person has access to the storage means on one side and e.g., an automatic device picks up and places the storage means from an other side of the platform. In this way, the loading area (310) with the levelling rollers (320) may be the point of interface between the automatic part of the storage unit and the manual part. The platform may also comprise a different number of places for storage means such as 1,3,4,5,6,7,8 and so on places. Each place can also be called platforms according to the invention.

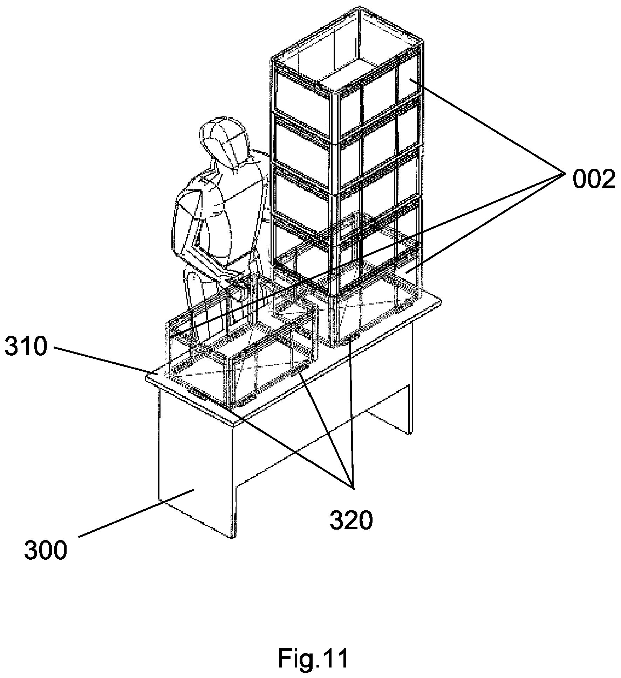

Fig. 11 illustrates a stationary device (300) comprising the inventive alignment system (310) for two storage spaces, fitted with levelling rollers (320) arranged along the perimeter of the storage means, in particular one storage space has a storage means (002) and the other a stack of storage means (002), indicating that the number of trays mounted on the fixed platform can be any number and is not limited in the way of the presented invention.

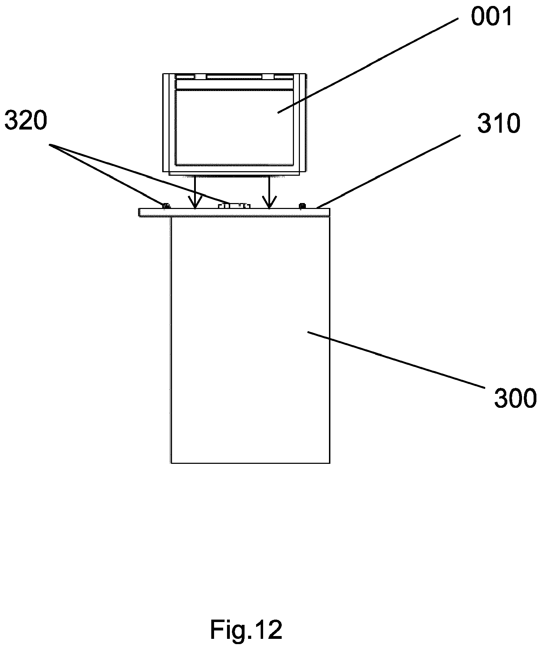

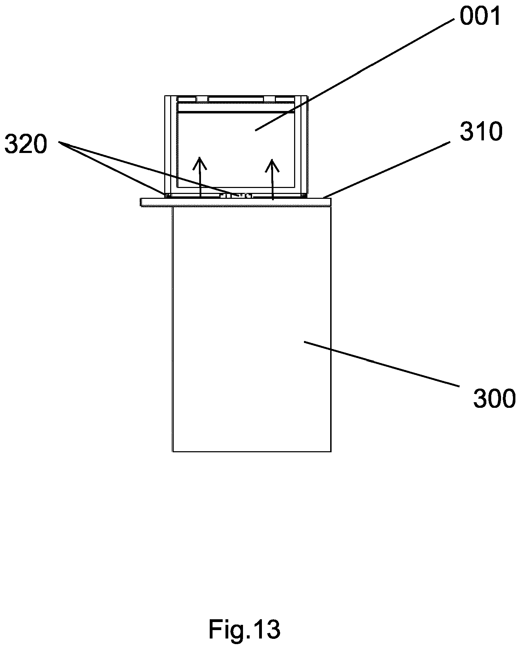

Figures 12-13 show how to pick up and place the storage means on the fixed platform. As shown in the drawings, both the positioning and the removal of the storage means (001) from the fixed platform (310) may be done in a vertical direction. As the platforms (310) themselves are preferably not movable, there is no risk of the storage means shifting in the vertical direction (bouncing, tipping and vibrations that can occur during movement) and therefore no need to fix the position of the storage means in the vertical direction.

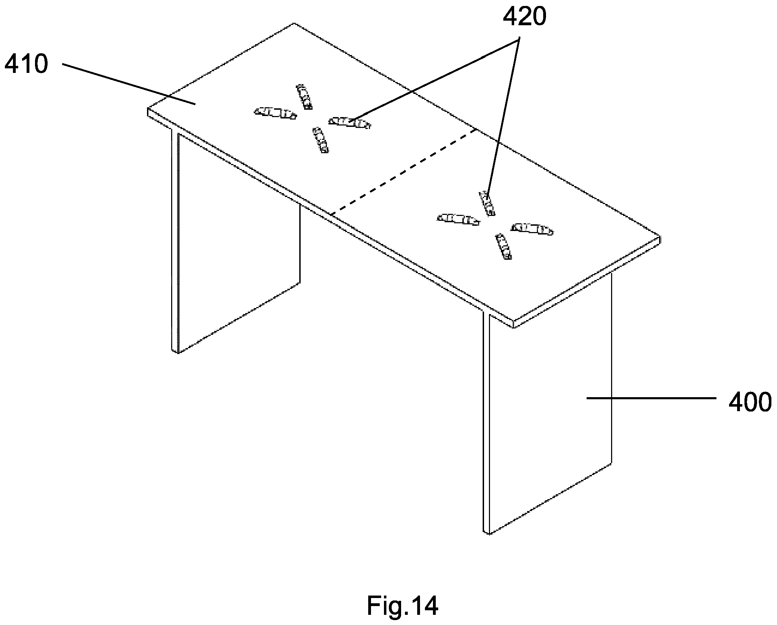

Fig. 14 shows another version of the stationary device (400) with a stationary platform (410) for two storage spaces, equipped with levelling rollers (420), in a cross-shape arrangement relative to each other and located in a center part of each place for a storage means. The platform may also comprise a different number of places for storage means such as 1,3,4,5,6,7,8 and so on places. Each place can also be called platforms according to the invention.

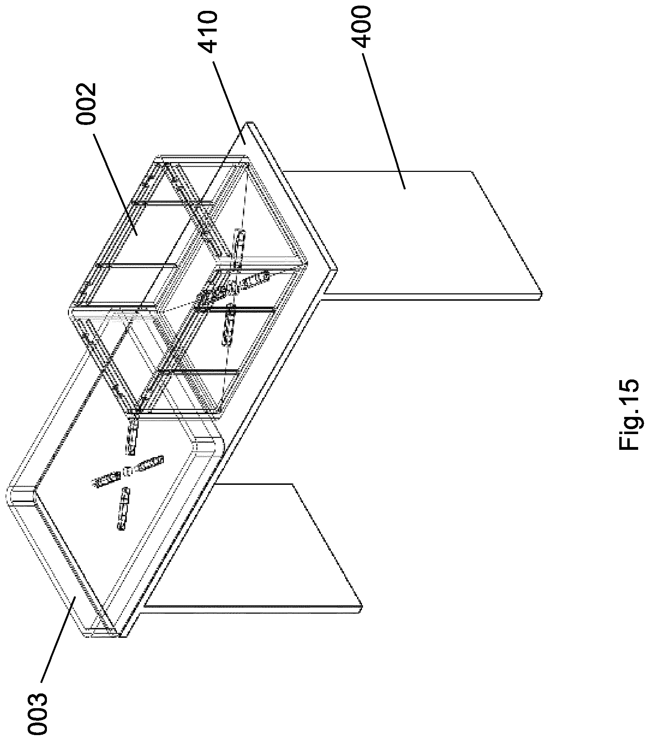

Fig. 15 shows a stationary device (400) with a fixed platform (410) for two storage spaces, equipped with levelling rollers (420), in a cross-shape arrangement relative to each other and located in a center part of each place for a storage means with the capability to hold different types of storage means simultaneously next to each other, with a storage means (002) and a larger storage means (003). The pick-up methods shown in Figs. 12-13 are also valid for this version of the storage means.

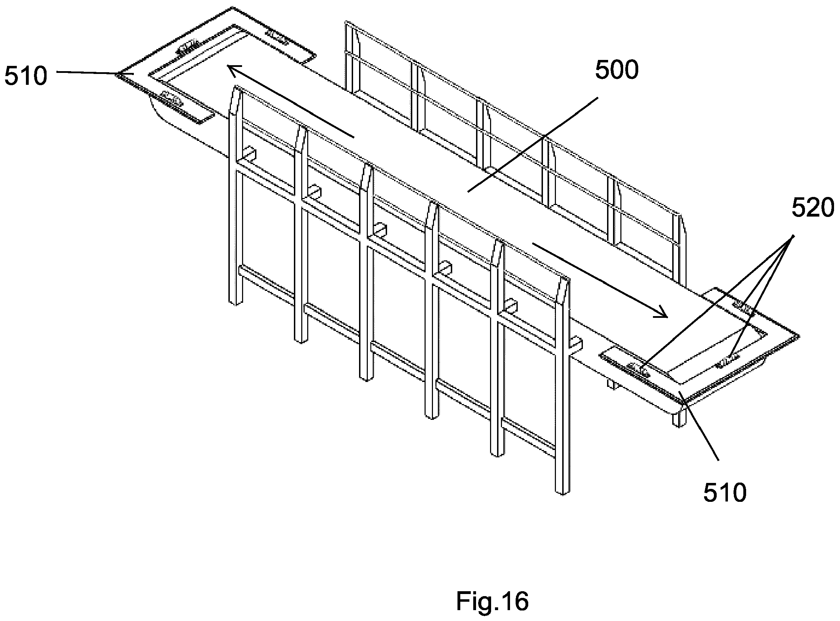

Fig. 16 shows the possibility of using a method of aligning the trays on the conveyor. Thus, the conveyor (500) is fitted at both ends with platforms (510) equipped with levelling rollers (520). The rollers (520) are located on the platforms such that they interact with the cavities of the storage means, preferably arranged along its perimeter. There is no roller located on the side of the platform facing the conveyor belt to allow the storage means to reach one of the platforms (510), on which the packaging is aligned with the rollers (520) e.g., for subsequent operations for its movement such as by a third-party automatic device. The method of moving the storage means by the device is the same as described in figures 12-13.

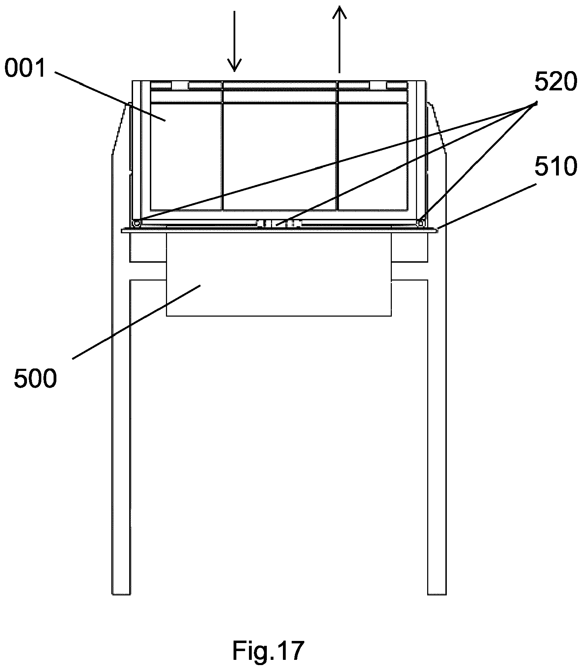

Fig.17 shows the conveyor (500) in frontal view, with the storage means (001) standing on the platform (510) at the near edge of the conveyor, aligned with the rollers (520). The arrows indicate the direction in which the tray (001) is taken / installed from the conveyor (500). It is also understood that the configuration of the conveyor as well as the position of the storage means thereon may be different, and the described example in no way limits it to the proposed embodiment, but merely represents an example of its execution.

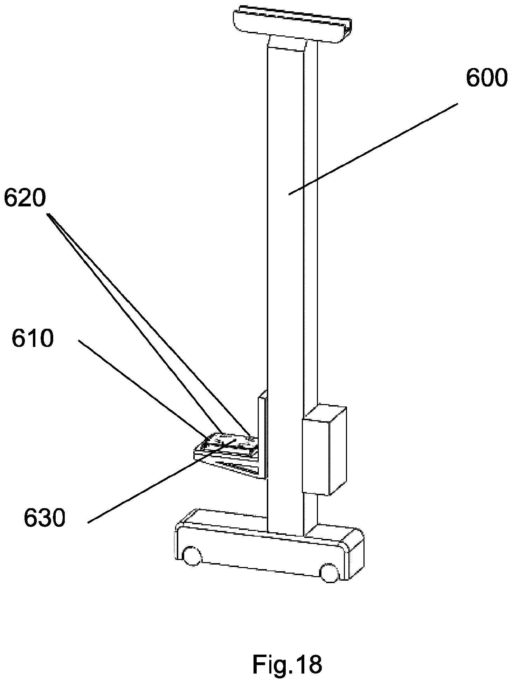

Figure 18 shows a version of a mast-type high-bay transport and handling device (600), equipped with a loading platform (610) with levelling rollers (620) arranged in a diamond shape arrangement on it. Preferably, there is also a lock (630) on the platform (610) to hold the storage means vertically.

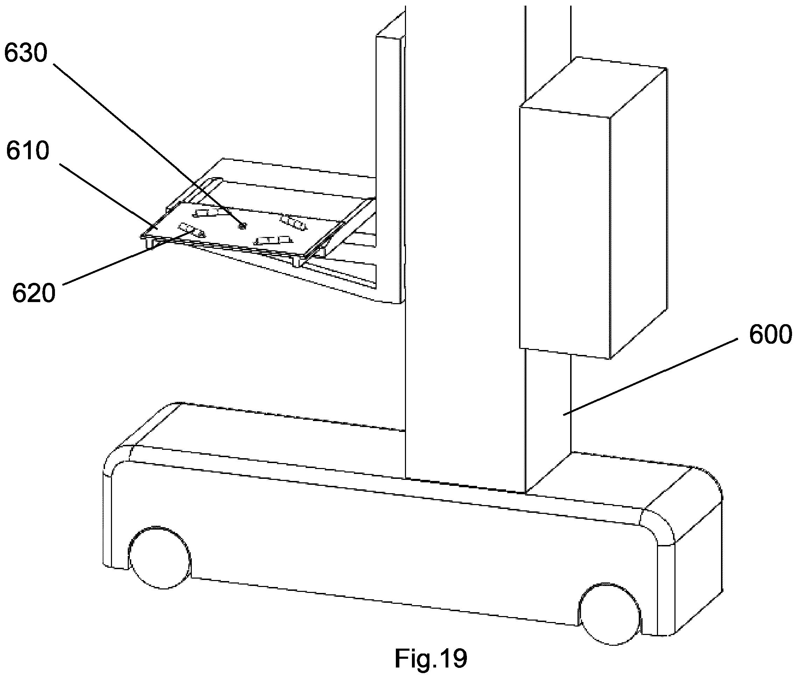

Fig. 19 shows the platform (610) of a mast-type tall-loader (600) fitted with levelling rollers (620) arranged in a diamond shape arrangement on it. The diamond-shaped arrangement of the levelling rollers (620) on the platform (610) is inherently identical with the cross-shaped arrangement of the levelling rollers (220) on the platform (210). This arrangement demonstrates only that the number of levelling rollers and the topology of their arrangement can be different, not only as in the previously described examples.

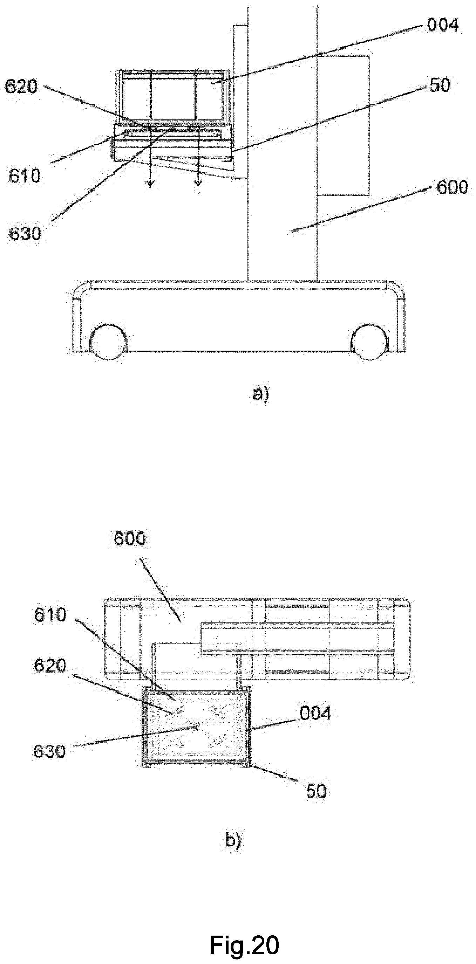

Figure 20-21 shows how to pick up and place storage means on the platform (610) of the mast-type high loader (600).

Thus, figs. 20a, 20b show in two views how the device (600), by moving down its carriage with the platform (610), places the tray (004), originally aligned and standing on the platform, on the storage site (50).

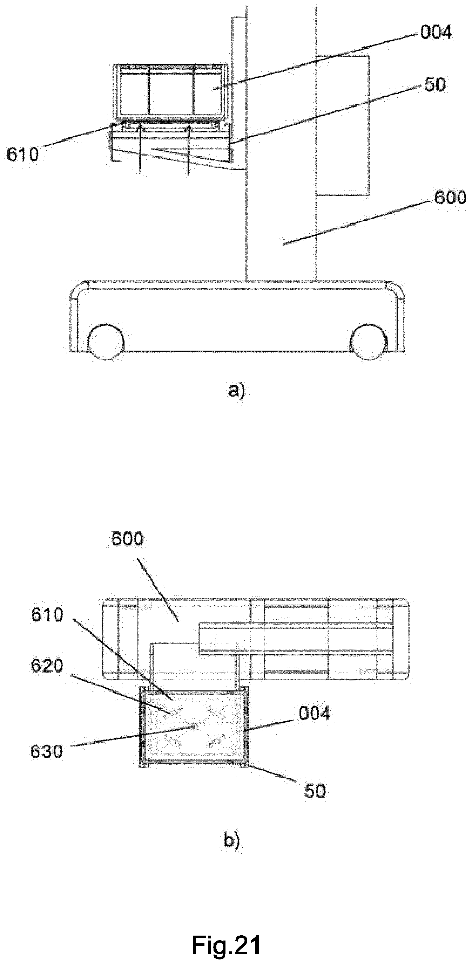

And Figures 21a and 21b show in two views how the device (600), by moving its carriage with the load pad (610) upwards, takes the storage means (004) from the storage location (50). It is understood that in the process of taking the storage means (004), it is aligned on the rollers (620) of the device and, if necessary, subsequently secured against vertical movement by a lock (630).

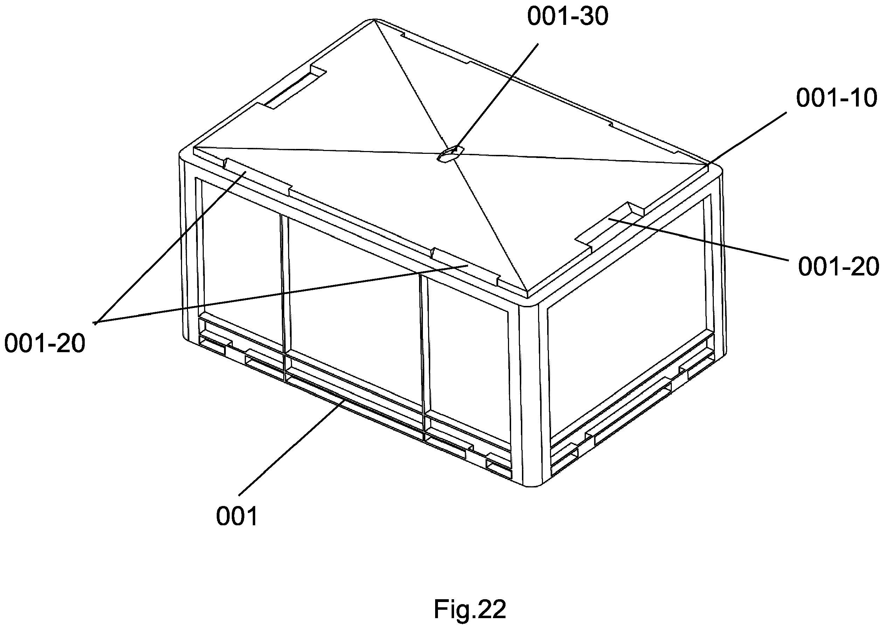

Fig. 22 shows an example of a storage means bottom configured for handling with load pads (110) and (310) having alignment rollers (120) and (320) placed along their perimeter. Thus, the bottom of the storage means (001-10) is predominantly flat, the recesses for the rollers (001-20) in one direction having inclined centering surfaces made for the opposing rollers towards each other in order to ensure that the storage means is secured in all horizontal directions. In the center of the bottom of the storage means (001) a cavity (001-30) is provided to retain the storage means from vertical movement by a lock (130) that is located on the platform. It is clear that the number of slots/cavities (001-20) for rollers (120) or (320) in the storage means and their locations should correspond to the number of alignment/levelling rollers or at least be not less than the number of rollers. It is also clear that placing the rollers along the perimeter of the storage means, along/around its circumference, limits the operation of this platform with different sized storage means. It is possible to operate the inventive alignment system with only one size of storage means, but different heights of them.

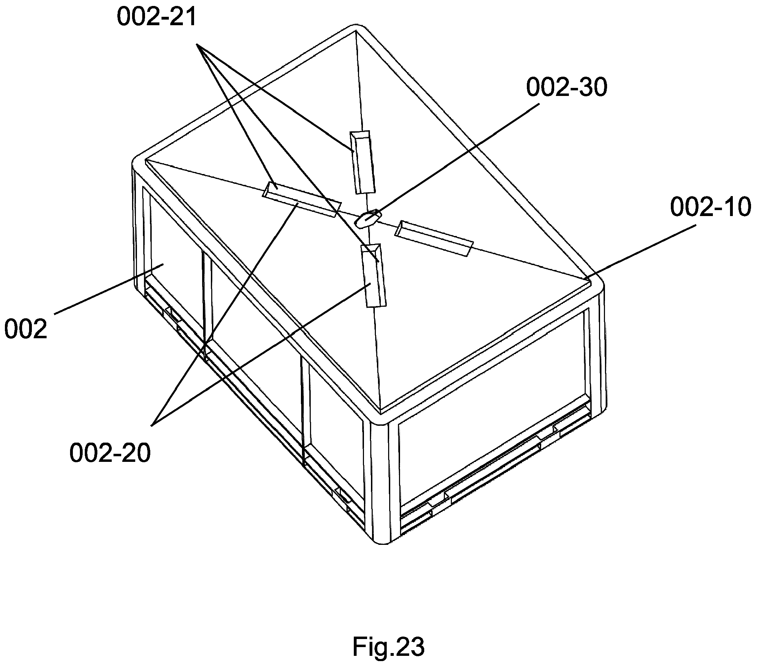

Figure 23 shows a version of the bottom of a storage means (002), (003) designed to work with levelling rollers (220) or (420) positioned crosswise on the platform (210) or (410). Thus, the base of the container (002-10) is predominantly flat, the recesses/cavities for the rollers (002-20) may have in one direction inclined centering surfaces (002-21) oriented in opposing pairs, whereby, depending on the particular container, the opposing walls of individual cavities may have both an inclination or just one of them. An inclination may be defined as having an angle that differs from a 90° angle relative to the platform surface. Preferably in the center of the bottom of the storage means (002) a further cavity (002-30) is provided for interaction with a locking mechanism (230) from the platform to keep the container from moving vertically. It is understood that the number and position of the recesses/cavities (002-20) for the rollers (220) or (420) must match the number of levelling rollers or be at least as high as the number or rollers.

An advantage of this arrangement of the slots/cavities (002-20) according to the number of rollers (220) or (420) is that it enables the platforms (210) and (410) to handle a wide range of storage means sizes, from a minimum size that does not exceed the topology of the rollers and beyond.

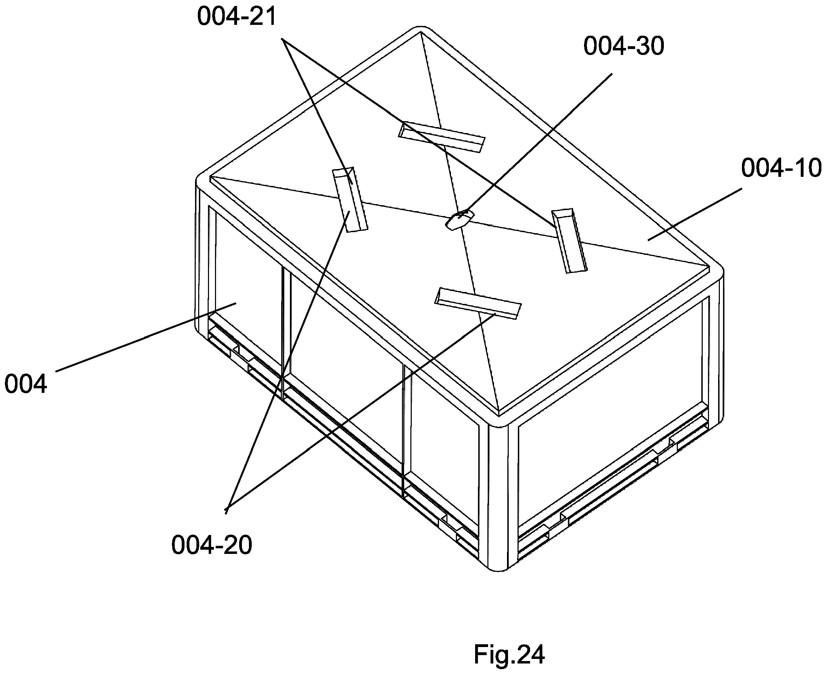

Figure 24 shows a version of the base/bottom surface of a storage means (004) designed to work with the alignment rollers (620) positioned rhombically or diamond shaped on the platform (610). Thus, the base of the container (004-10) is predominantly flat, the recesses/cavities for the rollers (004-20) having, in one direction, inclined centering surfaces (004-21)/cavity walls oriented in pairs in opposition, whereby, whereby, depending on the particular container, the opposing walls of individual cavities may have both an inclination or just one of them. Preferably in the center of the bottom of the storage means (004) a further cavity (004-30) is provided for interaction with a locking mechanism (230/630) from the platform to keep the container from moving vertically. It is clear that the number of recesses (004-20) for the rollers (620) and their locations, must correspond to the number of levelling rollers or be at least as high as the number or rollers. This diamond shaped arrangement of the levelling rollers on the platform has the same advantages and disadvantages as the crosswise arrangement of the rollers.

## Claims

1. Alignment system for storage means, comprising two separable parts (001, 100, 002, 200, 003, 300, 510) a first part located on a platform and a second part located on the storage means
the platform comprises
- a surface (110, 210, 310, 510) adapted to carry or hold or store the storage means (001,002,003) and
- leveling rollers (120, 220, 320, 420, 520) with a defined axis of rotation, the leveling rollers projecting at least partially beyond the surface of the platform
the storage means (001,002,003) comprises
- cavities (001-20. 002-20, 004-20) on its bottom surface that correspond to the leveling rollers (120, 220, 320, 420, 520) in relative position and orientation such that the storage means rest upon the surface of the platform when the leveling rollers (120, 220, 320, 420, 520) are located within the cavities.

2. Alignment and securing system according to claim 1
**characterized in that**
the rollers (120, 220, 320, 420, 520) and cavities (001-20. 002-20, 004-20) are each aligned towards each other forming a V- or X- shape, preferably located in the center part of the platform and/or the bottom surface.

3. Alignment and securing system according to claim 1
**characterized in that**
the cavities (001-20. 002-20, 004-20) are aligned on at least 2, preferably 3, edges of the storage means (001,002,003).

4. Alignment and securing system according to claim 1 or 2 **characterized in that**
an axis of rotation of the leveling rollers (120, 220, 320, 420, 520) is parallel to the surface of the platform and / or horizontally aligned to the platform.

5. Alignment and securing system according to claim 1 to 4
**characterized in that**
the bottom surface of the storage means is adapted to shift on the rollers parallel to the surface when the rollers (120, 220, 320, 420, 520) are located outside the cavities.

6. Alignment and securing system according to any of claim 1 to 5 **characterized in that**
the cavities have a tapered shape, namely comprise a pyramidal shape, that expands towards its opening, wherein preferably a first inner surface of the cavity is vertical or almost vertical and an opposing inner surface is provided with an angle towards the first inner surface that deviates from 180°.

7. Alignment and securing system according to any of claim 1 to 6 **characterized in that**
the openings of the cavities are slightly larger than the corresponding rollers and balls.

8. Alignment and securing system according to any of claim 1 to 7 **characterized in that**
the platform comprises a locking mechanism that is adapted to securingly interact with a corresponding entity on the bottom surface of the storage means when the rollers are located within the cavities.

9. Alignment and securing system according to any of claim 1 to 8 **characterized in that**
the locking mechanism may comprise a hock and/or a magnet.
